# EUROPÄISCHE PATENTSCHRIFT

(11) **EP 2 505 024 B1**
(45) Veröffentlichungstag und Bekanntmachung des Hinweises auf die Patenterteilung: **19.03.2014**
(21) Anmeldenummer: 10787361.4
(22) Anmeldetag: 26.11.2010
(51) Int. Cl.: H04W 52/02

(54) **EINE DATENÜBERTRAGUNGSVORRICHTUNG UND EIN VERFAHREN ZUM AKTIVIEREN EINER DATENÜBERTRAGUNG**
A DATA TRANSMISSION APPARATUS AND A METHOD FOR ACTIVATING A DATA TRANSMISSION
DISPOSITIF DE TRANSMISSION DE DONNÉES, ET PROCÉDÉ D'ACTIVATION DE TRANSMISSION DE DONNÉES

(30) Priorität: 26.11.2009 DE 102009047199
(43) Veröffentlichungstag der Anmeldung: 03.10.2012
(73) Patentinhaber: Fraunhofer Gesellschaft zur Förderung der angewandten Wissenschaft E.V., 80686 München (DE)
(72) Erfinder: STURM, Roland, 90491 Nürnberg (DE); MILOSIU, Heinrich, 91080 Uttenreuth (DE); GRILLBORZER, Artur, 90429 Nürnberg (DE); GEHRMANN, Volker, 91054 Erlangen (DE); TITTEL, Martin, 91301 Forchheim (DE); HUPP, Jürgen, 90425 Nürnberg (DE); FLÜGEL, Christian, 90409 Nürnberg (DE)
(74) Vertreter: Stöckeler, Ferdinand
(86) Internationale Anmeldenummer: PCT/EP2010/068323
(87) Internationale Veröffentlichungsnummer: WO 2011/064338

(56) Entgegenhaltungen:
- WO-A1-03/098851
- GB-A- 2 415 573
- GB-A- 2 455 771
- US-A1- 2009 129 306
- ANASTASI G ET AL: "Extending the Lifetime of Wireless Sensor Networks Through Adaptive Sleep", IEEE TRANSACTIONS ON INDUSTRIAL INFORMATICS, IEEE SERVICE CENTER, NEW YORK, NY, US, Bd. 5, Nr. 3, 1. August 2009 (2009-08-01), Seiten 351-365, XP011271718, ISSN: 1551-3203, DOI: DOI:10.1109/TII.2009.2025863

## Beschreibung

Die vorliegende Erfindung bezieht sich auf eine Datenübertragungsvorrichtung, ein Datenübertragungssystem und ein Verfahren zum Aktivieren einer Datenübertragung und insbesondere auf eine Vorrichtung und ein Verfahren einer Aufwachsignalisierung und gleichzeitigem Netzwerkaufbau.

Damit mehrere Teilnehmer (z. B. Funkknoten) Daten über ein Netzwerk übertragen können, ist es beispielsweise üblich, ein zeitgesteuertes Medienzugriffsverfahren zu nutzen. Netzwerkprotokolle für drahtlose Netzwerke verwenden dazu häufig TDMA-Verfahren (TDMA = time division multiple access). Die Funkknoten solcher Netzwerke enthalten Standard-Transceiver-Bausteine. Bei TDMA-Verfahren werden die Transceiver nur zu bestimmten Zeitpunkten und für kurze Zeit aktiviert. In dieser Zeit wird die Kommunikation abgewickelt. Danach wird der Transceiver wieder ausgeschaltet (Ruhezustand oder Ruhephase oder Schlafzeit). Damit ist insbesondere der Empfänger die meiste Zeit nicht aktiv und somit für eine Funkkommunikation nicht erreichbar (Latenzzeit). Um Strom zu sparen, wird das TDMA-Verfahren häufig mit niedrigem Duty-Cycle betrieben, wobei der Duty-Cycle beispielsweise den prozentualen Anteil an einer Gesamtperiode definiert, in welchem die Übertragungseinrichtung Daten überträgt. In diesem Szenario kommt es daher zur Erhöhung der Reaktionszeit bzw. zu unerwünschten langen Latenzzeiten. Ein Ereignis kann erst im nächsten Empfangszeitpunkt erkannt und weitergeleitet werden. Um mit kleinen Batterien (z. B. Knopfzellen) Betriebsdauern in der Größenordnung von Jahren erreichen zu können, muss ein solcher Empfänger eines Standard-Transceivers in der Regel minutenlang (dies hängt auch von der verwendeten Batterie ab) ausgeschaltet bleiben, um danach wieder kurz eingeschaltet werden zu können. Der Duty Cycle muss also sehr klein sein.

Stromsparende Empfänger (z. B. Aufweckempfänger) sind sehr einfach aufgebaut und weisen eine moderate Empfindlichkeit auf. Die erzielbaren Stromaufnahmen liegen jedoch in der Größenordnung von nur 100 Mikroampere. Daher eignen sie sich gut für den Dauerbetrieb, können allerdings in der Regel nicht als Hauptempfänger genutzt werden, weil ihre Empfindlichkeit zu gering ist.

Drahtlose Netzwerke erhalten ihre Synchronizität in der Regel durch regelmäßige Synchronisationsnachrichten (z. B. so genannte Beacon) aufrecht. Um diese regelmäßig zu empfangen, ist ein Einschalten des Empfängers zur richtigen Zeit (im TDMA-Verfahren) notwendig. Bei sehr langen Schlafzeiten zwischen den Phasen, in denen eine Datenübertragung stattfinden kann, können sich Drifteffekte negativ auswirken. Je nach Genauigkeit der internen Zeitgeber driften die Zeiten auseinander und die nächste Synchronisationsnachricht kann verpasst werden. Dies kann verhindert werden, indem die Schlafzeiten verkürzt werden, was energetisch ungünstig ist, zusätzliche Synchronisationsmechanismen können allerdings eine Verbesserung bringen. Eine Möglichkeit sind zusätzliche Synchronisationsnachrichten, die nur der Synchronisierung dienen, nicht aber eine Datenübertragung ermöglichen. Ebenso können Drifteffekte durch längere Empfangsfenster ausgeglichen werden.

Drahtlose Sensometzwerke verwenden meist TDMA-basierte Protokolle. Bei sehr Strom sparenden Anwendungen sind die Schlafzeiten sehr lang und damit auch die Latenzzeit. Es vergeht daher eine lange Zeit, bis ein Ereignis über das Netzwerk gemeldet werden kann. Die Latenzzeit kann bei Batterie-gestützten Anwendungen mit Betriebsdauer ab 1 Jahr bereits im Minutenbereich liegen. Bei Systemen mit Aufweckempfänger dient dieser in der Regel nur dazu, das Hauptsystem im Falle eines Ereignisses, wie beispielsweise eines Interrupt, zu aktivieren. Nach dem Aktivieren erfolgt dann ein Netzwerkaufbau durch Neusynchronisation.

Aus den bereits Gesagten ergeben sich für die beschriebenen Zugriffsverfahren auf das Netzwerk eine Reihe von Problemen. So arbeiten beispielsweise stromsparende synchrone drahtlose Sensornetzwerke in der Regel mit dem TDMA-Verfahren, so dass sie nicht ständig empfangsbereit sind, sondern lediglich zu diskreten Zeitpunkten. Durch die nicht ständige Empfangsbereitschaft wird zwar der Energieverbrauch gesenkt, andererseits kann ein Ereignis aber nur zu den diskreten Zeitpunkten über das Netzwerk gemeldet bzw. übertragen werden. Die dadurch entstehenden Latenzzeiten sind umso länger, je niedriger der besagte Duty-Cycle ist. Dies ist für viele Anwendungen nicht akzeptabel.

Ein weiteres Problem ergibt sich aus der begrenzten Betriebsdauer im Batteriebetrieb. Ist die gewünschte Betriebsdauer bei Batteriebetrieb, z. B. speziell bei einem Knopfzellenbetrieb, auf mehr als einem Jahr angesetzt, so ergibt sich ein maximal zulässiger Stromverbrauch des verwendeten Empfängers von deutlich weniger als beispielsweise 100 µA. Eine solche mittlere Stromaufnahme kann mit Standard-Transceivern und TDMA-Verfahren nur erreicht werden, wenn der Duty-Cycle im einstelligen Prozentbereich liegt. Damit verbunden ist wiederum der Nachteil einer sehr langen Latenzzeit.

Ein weiteres Problem ergibt sich daraus, dass bei sehr langen Schlafzeiten, die beispielsweise im Bereich von mehreren Stunden liegen können, sich Drifteffekte unangenehm auswirken können. Diese Drifteffekte beschreiben ein Auseinanderlaufen der Zeitgeber für die einzelnen Netzwerkknoten, wenn sie über einen langen Zeitraum nicht synchronisiert wurden (d. h. angepasst wurden). Um dies zu kompensieren, wären zusätzliche Maßnahmen zur Synchronisation erforderlich oder aber die Netzwerkknoten müssten ein längeres Empfangsfenster aufweisen. Die zusätzlichen Maßnahmen könnten beispielsweise zusätzliche Signale umfassen, die über das Netzwerk übertragen werden. In jedem Fall würde damit der Energieverbrauch wieder ansteigen. Daher ist ein Kompromiss zwischen der möglichst effizienten Nutzung der bereitstehenden Energie und der Vermeidung der besagten Drifteffekte erforderlich. Dieser Kompromiss begrenzt das Energieeinsparpotential beträchtlich.

Schließlich ist im Stand der Technik nachteilig, dass zum Empfang von Synchronisationssignalen in der Regel der Hauptempfänger genutzt wird, was wiederum zu einem erhöhten Strom oder Energieverbrauch führt.

Die US 2009/0129306 A1 beschreibt ein Netzwerk aus Kommunikationsknoten, und zwar ausgestaltet als ein sogenanntes ad hoc Netzwerk. Die dort gezeigten Kommunikationsknoten umfassen neben einer normalen Zweiwegekommunikationskomponente einen Aufweckempfänger oder gar einen Aufwecksendeempfänger, die in der Lage sind, auch Signale bei weniger Standby-Energieverbrauch zu empfangen und zu verarbeiten bzw. noch weiterzuleiten, um die Zweiwegekommunikationskomponenten der Knoten aufzuwecken. In dem Aufwecksignal könnten zusätzliche Hilfsinformationen enthalten sein, wie zum Beispiel Sensorstatusinformationen, Weiterleitungsanzahl, Fehlerstände, ein Verschlüsselungsschlüssel oder sonstige die Netzwerkkommunikation selbst vereinfachende Informationen. Die Aufwecksignale umfassen auch Informationen darüber, welche Knoten den Schlafzustand verlassen sollen und welche nicht.

Die GB 2415573 A beschreibt einen Leistung einsparenden Scheduler für ein Drahtlosnetzwerk. Das dokument beschäftigt sich somit mit einem synchronisierten Netzwerk mit einem Access Point als Master. Was nun dort vorgeschlagen wird, eine Optimierung des Scheduler vorzunehmen, dahingehend, dass derselbe basierend auf einer Übertragungszeitdauerberechnung und einem Priorisierungsalgorithmus die Schlafzeiten der Kommunikationsknoten optimiert. Der Access Point berechnet die Übertragungszeiten der Downlink-Daten für die einzelnen mobilen Stationen und plant die nächste Beacon-Periode optimiert unter Berücksichtigung der berechneten Übertragungszeitdauern und teilt das Ergebnis und das Scheduling in sogenannten SIV-Frames den mobilen Stationen mit.

Ausgehend von diesem Stand der Technik liegt der vorliegenden Erfindung die Aufgabe zugrunde, eine Datenübertragungsvorrichtung, ein Datenübertragungssystem und ein Verfahren zum Aktivieren einer Datenübertragung zu schaffen, die den oben beschriebenen Kompromiss zwischen einem geringen Energieverbrauch und sehr kurzen Latenzzeiten vermeidet und somit nach einer sehr kurzen Zeit sofort betriebsbereit ist und gleichzeitig ein Minimum an Energie verbraucht.

Diese Aufgabe wird durch eine Datenübertragungsvorrichtung nach Anspruch 1, ein Datenübertragungssystem nach Anspruch 8 oder 11 oder ein Verfahren zum Aktivieren einer Datenübertragung nach Anspruch 13 gelöst.

Der vorliegenden Erfindung liegt die Erkenntnis zugrunde, dass eine energieintensive Datenübertragungseinrichtung in einen Ruhezustand versetzbar ist, aus dem sie mittels eines Aufweckempfängers in einen Betriebszustand aktiviert werden kann. Der Aufweckempfänger ist ausgebildet, um ansprechend auf ein Initiierungssignal (oder Aufwecksignal) die Datenübertragungseinrichtung von dem Ruhezustand in den Betriebszustand zu aktivieren. Dabei ist das Initiierungssignal derart ausgebildet, dass es zusätzliche Informationen aufweist (Datenübertragungsinformationen), um beispielsweise die Datenübertragungseinrichtung zu einem bestimmten Zeitpunkt zu aktivieren, nämlich erst dann, wenn auch eine Datenübertragung erfolgen kann. Alternativ wird die Datenübertragungseinrichtung mit spezifischen Netzwerkparametern oder Datenübertragungsparametern, die in dem Initiierungssignal enthalten sind, initiiert. Somit nutzen Ausführungsbeispiele der vorliegenden Erfindung das Aufwecksignal des Aufweckempfängers, um Zusatzinformationen zu übertragen, die bezwecken, dass die Datenübertragungseinrichtung möglichst effizient betrieben wird: z. B. erst zu dem Zeitpunkt eingeschaltet wird, wenn entweder eine Synchronisation erfolgt oder aber eine Datenübertragung beginnen kann, wobei gleichzeitig Netzwerkparameter übergeben werden können, so dass ein Zeitverlust beim Netzwerkaufbau minimiert wird.

Die Aufwachsignalisierung dient somit dazu, beispielsweise ein mit dem TDMA-Verfahren und niedrigem Duty-Cycle arbeitendes synchrones drahtloses Netzwerk bei Bedarf schnell und mit wählbaren Übertragungsparametern zu aktivieren. Durch die minimale Latenz können Ereignisse damit schnell übertragen werden. Die Aufwachsignalisierung verringert ferner bei vorher nicht synchronen Netzwerken den Energieverbrauch während der Synchronisierungsphase, weil ein Aufwachen der Knoten nicht mehr vom Aufweckzeitpunkt an bis zur nächsten Synchronisationsnachricht empfangsbereit sein muss, sondern beispielsweise davon Kenntnis erhält, wann diese Synchronisationsnachricht gesendet wird, wobei die Synchronisationsnachricht beispielsweise den oben beschriebenen Beacon umfassen kann. Schließlich können mittels der Aufwachsignalisierung Übertragungsparameter neu gewählt werden (d. h. geändert werden), die an das Zeitverhalten des Protokolls z. B. an den zu erwartenden Datendurchsatz angepasst werden können.

Ausführungsbeispiele bezwecken daher die Reduktion des Energieverbrauchs beim Betrieb von beispielsweise drahtlosen synchronen Sensornetzwerken und die Reduktion von Latenzzeiten bei der Datenübertragung. Sensometzwerke sind daher besonders interessant, da gerade für diese Netzwerke sehr lange Ruhephasen existieren, aus denen die Netzwerke sehr schnell aufgebaut werden sollen, um ein Sensorereignis ohne Zeitverlust an einen Empfänger zu übertragen. Das Sensorsignal kann beispielsweise ein Überschreiten einer Sensortemperatur oder ein Ansprechen eines Bewegungsmelders oder ein Öffnen einer Tür oder ähnliche Ereignisse umfassen.

Gemäß weiteren Ausführungsbeispielen weist jeder Funkknoten (oder allgemein Netzwerkknoten) dazu neben einer regulären Sende- und Empfangsschaltung (Datenübertragungseinrichtung oder Hauptempfänger) einen sehr einfachen Aufweckempfänger (sogenannter Wake-up-Receiver = WUR), der sich durch einen extrem niedrigen Energieverbrauch (z. B. einen Stromverbrauch von weniger als 100 µA oder weniger als 10 µA oder weniger als 1 µA) auszeichnet und deshalb ständig im Empfangsmodus bleiben kann. Bei Ausführungsbeispielen detektiert dieser Aufweckempfänger das Aufwecksignal, welches durch von einzelnen Knoten detektierte Ereignisse im Netz ausgelöst wird, und aktiviert dann den Funkknoten, der sich beispielsweise in einem sehr stromsparenden Modus (Schlafphase oder Ruhezustand) befindet. Dieser Prozess des Aufweckens kann von Knoten zu Knoten verlaufen, indem der aufgeweckte Knoten seinerseits nach dem Aufwecken selber ein Aufwecksignal aussendet, welches von einem weiteren Funkknoten detektiert wird. Als Folge bilden bisher nicht synchronisierte Funkknoten durch Neusynchronisation ein synchrones Netzwerk aus.

Ausführungsbeispiele beschreiben ebenso ein Verfahren zur vorzeitigen Aktivierung eines duty-cycle-basierten Netzwerks, welches synchron oder nichtsynchron sein kann (z. B. ein drahtloses Netzwerk), in der Schlafphase ohne Synchronisationsverluste. Diese Verfahren sind vorteilhaft, da die Übertragungsparameter neu eingestellt und an das Datenaufkommen angepasst werden können. Sind die einzelnen Funkknoten vorher noch nicht synchron, erlaubt das erfindungsgemäße Verfahren eine Reduktion des Energieverbrauchs während der Synchronisationsphase.

Durch den speziellen Aufbau der Aufwachsignalisierung mit zusätzlichen Informationen kann daher der Energieverbrauch während der Synchronisierung deutlich minimiert werden. Die Aktivierung eines vorher bereits synchronen drahtlosen Netzwerks ist ohne Synchronisationsverlust und mit gegebenenfalls veränderten Übertragungsparametern (wie beispielsweise geänderter Framelänge, Zeitschlitzlänge, Frameaufbau) möglich. Das Aufwachsignal beinhaltet beispielsweise in diesem Fall Informationen bezüglich der Übertragungsparameter, die wie gesagt den Frameaufbau und den Zeitpunkt der nächsten Datenübertragung umfassen können.

Ausführungsbeispiele der vorliegenden Erfindung werden nachfolgend Bezug nehmend auf die beiliegenden Zeichnungen näher erläutert. Es zeigen:
- Fig. 1: eine schematische Darstellung einer Datenübertragungsvorrichtung gemäß einem Ausführungsbeispiel der vorliegenden Erfindung;
- Fig. 2: zeigt eine schematische Darstellung eines normalen TDMA-Betriebs;
- Fig. 3: eine Veranschaulichung des Auseinanderdriftens der Zeittakte verschiedener Netzwerkknoten;

- Fig. 4: eine Aktivierung eines synchronen Netzwerks ohne Synchronisationsverluste gemäß einem weiteren Ausführungsbeispiel;
- Fig. 5: eine Aktivierung eines vorher nicht synchronen Netzwerks gemäß einem weiteren Ausführungsbeispiel;
- Fig. 6: einen möglichen Aufbau für die Aufwachsignalisierung gemäß Ausführungsbeispielen;
- Fig. 7: eine Aktivierung von mehreren Netzwerkknoten, die sich gemäß Ausführungsbeispielen nacheinander selbst aktivieren und synchronisieren; und
- Fig. 8: ein zu dem System von Fig. 7 alternatives System von Netzwerkknoten.

Bezüglich der nachfolgenden Beschreibung sollte beachtet werden, dass bei den unterschiedlichen Ausführungsbeispielen gleiche oder gleichwirkende Funktionselemente gleiche Bezugszeichen aufweisen und somit die Beschreibung dieser Funktionselemente in den verschiedenen Ausführungsbeispielen untereinander austauschbar sind. Ebenso ist die gewählte Reihenfolge lediglich beispielhaft zu verstehen, so dass Vertauschungen der einzelnen Elemente ebenfalls möglich sind.

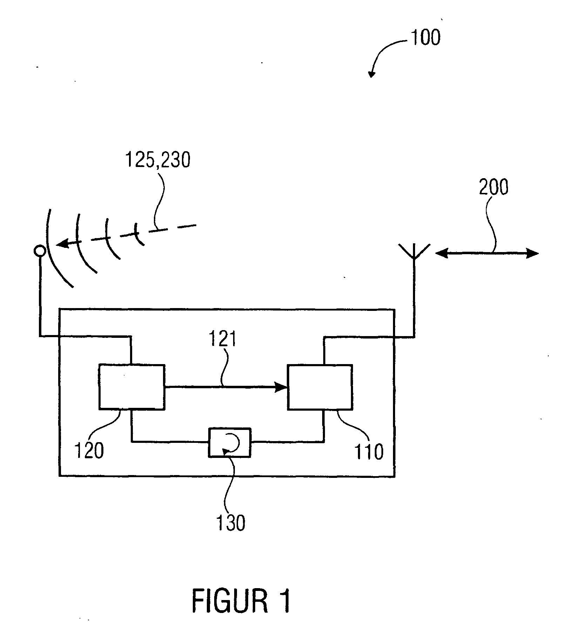

Fig. 1 zeigt ein Ausführungsbeispiel für eine Datenübertragungsvorrichtung 100 mit einer Datenübertragungseinrichtung 110 und einem Aufweckempfänger 120. Die Datenübertragungseinrichtung 110 ist aktivierbar, um von einem Ruhezustand in einen Betriebszustand zu wechseln und in dem Betriebszustand eine Datenübertragung 200 mit einem Kommunikationspartner durchzuführen. Der Aufweckempfänger 120 ist ausgebildet, um während des Ruhezustands der Datenübertragungseinrichtung 110 für ein Initiierungssignal 125 empfangsbereit zu sein und ansprechend auf das Initiierungssignal 125 die Datenübertragungseinrichtung 110 zu aktivieren. Dies kann beispielsweise durch Übermittlung eines Aktivierungssignals 121 von dem Aufweckempfänger 120 an die Datenübertragungseinrichtung 110 erfolgen. Der Aufweckempfänger 120 ist ferner ausgebildet, um aus dem Initiierungssignal 125 eine Datenübertragungsinformation 230 zu extrahieren, um abhängig von der Datenübertragungsinformation 230 den Zeitpunkt für die Aktivierung der Datenübertragungseinrichtung 110 zu erhalten oder um die Datenübertragungseinrichtung 110 so zu aktivieren, dass die Datenübertragungseinrichtung 110 die Datenübertragung 200 abhängig von der Datenübertragungsinformation 230 durchführt. Die Datenübertragungseinrichtung 110 kann beispielsweise in dem Ruhezustand 210 vollkommen ausgeschaltet sein (oder minimal Energie verbrauchen), so dass lediglich der Aufweckempfänger 120 im Ruhezustand Energie verbraucht. Nur im Betriebszustand 220 ist die Datenübertragungseinrichtung 110 beispielsweise in der Lage Datenübertragungen 200 durchzuführen, währenddessen sie im Ruhezustand 210 lediglich auf den Aufweckempfänger 120 "hört" oder von diesem einschaltbar ist.

Die Datenübertragungsvorrichtung 100 kann ferner einen Zeitgeber 130 aufweisen, der beispielsweise eine Uhr oder einen Taktgeber umfasst und beispielsweise ausgebildet ist, um der Datenübertragungseinrichtung 110 Zeitbereiche zu signalisieren, in denen eine Datenübertragung 200 (beispielsweise mittels des TDMA-Verfahrens) kollisionsfrei möglich ist.

Die Datenübertragungsinformationen 230 umfassen im einfachsten Fall den Zeitpunkt, der beispielsweise mittels des Zeitgebers 130 feststellbar ist, zu welchem die Datenübertragungseinrichtung 110 aktiviert werden soll. Das kann beispielsweise dadurch geschehen, dass das Aktivierungssignal 121 zu dem Zeitpunkt der Aktivierung an die Datenübertragungseinrichtung 110 gesandt wird. Außerdem können die Datenübertragungsinformationen 230 Datenübertragungsparameter für die Datenübertragung 200 umfassen, die beispielsweise Zeit-Slots oder Framelängen der einzelnen Datenpakete innerhalb der Datenübertragung 200 umfassen.

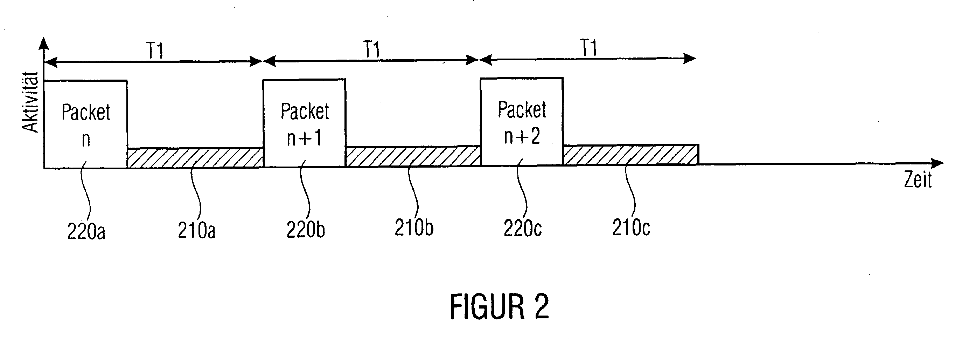

Fig. 2 zeigt den normalen TDMA-Betrieb, bei dem in Zeitschlitzen (Frames) einzelne Pakete übertragen werden, wobei die Zeitabschnitte oder Zeitschlitze 220 derart gebildet sind, dass Daten verschiedener Sender (Funkknoten) auf einem Kanal nacheinander übertragen werden können und diese nicht gegenseitig kollidieren (beispielsweise indem zwei Sender gleichzeitig Daten übertragen wollten). In den Zeitschlitzen 220 ist der Funkknoten aktiv (Betriebszustand) und eine Datenübertragung ist möglich, wobei die jeweilige Zeitdauer der Datenübertragung die Framelänge (Zeitschlitzlänge) definiert. In der übrigen Zeit (Idle) 210 ist der Funkknoten inaktiv (Schlafmodus oder Ruhezustand). Somit zeigt die Fig. 2 die Aktivität der Datenübertragungseinrichtung 110 entlang der Zeit. Während eines ersten Zeitschlitzes 220a erfolgt die Datenübertragung des Pakets n. Daran anschließend erfolgt eine erste Ruhephase 210a (Ruhezustand), und nach einer Zeit T1 (gemessen vom Anfang der Übertragung des Pakets n) wird ein zweites Paket n + 1 in dem zweiten Zeitschlitz 220b übertragen. Nach einer zweiten Ruhephase 210b erfolgt nach einem weiteren Zeitbereich T1 schließlich in einem dritten Zeitschlitz 220c die Übertragung eines dritten Pakets n + 2. In den Ruhephasen 210a, 210b und 210c können dann andere Übertragungsknoten Daten übertragen, ohne dass sich die einzelnen Knoten gegenseitig behindern. Während der Ruhephasen 210 kann außerdem beispielsweise der Aufweckempfänger 120 weiterhin aktiviert bleiben, jedoch ist die Datenübertragungseinrichtung 110 in den Ruhephasen 210 inaktiv. Somit ergibt sich eine periodische Datenübertragung mit der zeitlichen Periode T1, die durch den Betriebszustand 220 und den Ruhezustand 210 charakterisiert ist, wobei der prozentuale Anteil des Betriebszustands 220 an der Gesamtperiode T1 als Duty-Cycle bezeichnet wird.

Dieses TDMA-Verfahren definiert somit ein bekanntes Ausgangsszenario, das alternativ auch wie folgt beschrieben werden kann. Um Energie zu sparen arbeitet ein synchrones drahtloses Netzwerk im TDMA-Verfahren mit niedrigem Duty-Cycle. Nur im Bereich 220 zwischen bestimmten diskreten Zeitpunkten (Zeitschlitz) ist der Transceiver des Funkknotens aktiv und eine Datenkommunikation möglich. Außerhalb dieser Zeitschlitze ist der Funkknoten inaktiv (Schlafmodus 210). Dies gilt insbesondere für seinen Transceiver. Im Schlafmodus wird der zusätzliche, extrem Strom sparende Aufweckempfänger aktiviert und bleibt während der gesamten Schlafphase empfangsbereit. Funkknoten von vorher nicht synchronen Netzwerken sind dauerhaft im Schlafmodus und somit der Aufweckempfänger ständig aktiv.

Durch die ständige Empfangsbereitschaft des Aufweckempfängers im Schlafmodus des Funkknotens können innerhalb des Schlafmodus jederzeit Wake-up-Signale detektiert werden. Die Wake-up-Signalisierung dient primär dazu, den Funkknoten zu aktivieren. Das bedeutet, der Empfang eines korrekten Wake-up-Signals versetzt den Funkknoten in einen Aktivzustand, indem dieser in der Lage ist, auf ein bestimmtes Ereignis zu reagieren. Eine Datenkommunikation ist frühestens im nächsten Zeitschlitz möglich.

Synchronisiert ist ein Funkknoten dann, wenn er einerseits dem Zeitverhalten des übrigen Netzwerks folgt und andererseits so in das Netzwerk integriert ist (z. B. angemeldet etc.), dass er auch an einer Kommunikation teilnehmen kann bzw. darf.

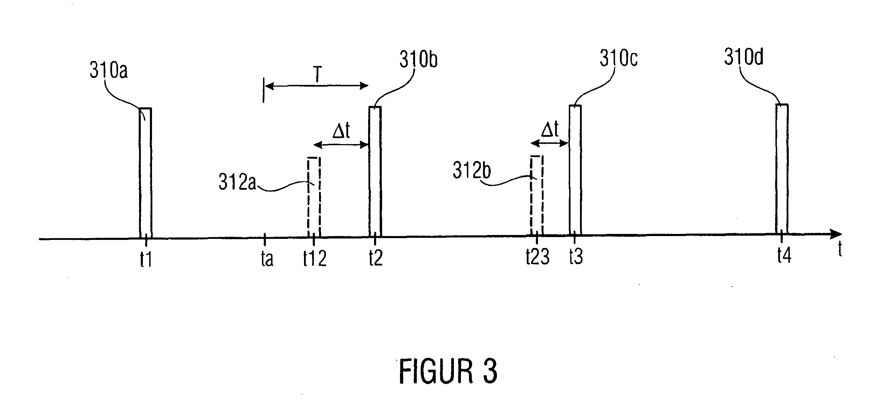

Fig. 3 verdeutlicht ein Problem von konventionellen Verfahren. Wenn der Duty-Cycle besonders klein ist und sehr lange Ruhephasen 210 eingelegt werden, besteht die Gefahr des Auseinanderdriftens der Zeitgeber 130. In Fig. 3 ist entlang der Zeit t zunächst der Zeitgeber eines Zentralknotens gezeigt, welcher ein erstes Zeitsignal 310a zur Zeit t1, ein zweites Zeitsignal 310b zur Zeit t2, ein drittes Zeitsignal 310c zur Zeit t3 und ein viertes Zeitsignal 310d zur Zeit t4 aussendet, wobei der Abstand der einzelnen Zeitsignale 310 beispielsweise gleich ist und somit ein Takt vorgegeben wird, an welchem sich die einzelnen Netzwerkknoten synchronisieren können (das so genannte Beacon-Signal). Wenn die Ruhephasen 210 sehr lang ausgebildet sind und sich die einzelnen Netzwerkknoten nur in sehr großen Abständen miteinander synchronisieren, kann es dazu führen, dass sich die Zeitgeber 130 der einzelnen Übertragungsknoten 100 von dem Beacon-Signal 310 um eine Zeitdifferenz Δt entfernt haben, so dass beispielsweise eine Datenübertragungsvorrichtung 100 ein erstes Taktsignal 312a zur Zeit t12 aufweist und ein zweites Taktsignal 312b zur Zeit t23. Beide Taktsignale 312 haben sich von dem Zeitsignal 310b und 310c um die Zeit Δt entfernt (sind beispielsweise zurückgeblieben). Um trotzdem eine synchrone Datenübertragung sicherzustellen, ist es wichtig, dass die Zeitgeber 130 der einzelnen Übertragungsknoten 100 neu gestellt werden, so dass sie in Übereinstimmung mit dem Zeitgeber 310 des Zentralknotens sind, d. h. sie müssen sich synchronisieren. Dies kann beispielsweise dadurch geschehen, dass die Zeitgeber 130 (die beispielsweise Uhren aufweisen können) um Δt vorgestellt (oder zurückgestellt) werden.

Gemäß Ausführungsbeispielen spielt dieses Auseinanderdriften jedoch keine Rolle. Beispielsweise erfolgt zu einem Zeitpunkt ta eine Aktivierung mittels des Initiierungssignals 125, mit welchem der Zeitpunkt t2 mitgeteilt wird, so dass bekannt ist, wann der nächste Zeittakt zu erwarten ist. Dies kann beispielsweise dadurch geschehen, dass die Zeitdauer T (T = t2 - ta) bis zum Zeitpunkt t2 übermittelt wird, so dass die zeitliche Drift Δt keine Rolle spielt. Damit ist es möglich, dass die Datenübertragungsvorrichtung 100 mit der Aktivierung der Datenübertragungseinrichtung 110 bis zu dem Zeitpunkt t2 wartet und diese nicht schon bereits vorher aktiviert wird. Wenn beispielsweise die Beacon-Signale 310 von dem Hauptempfänger 110 empfangen werden, kann damit deutlich Energie gespart werden. Die Zeitdauer T kann dabei entweder direkt an die Datenübertragungseinrichtung 110 mittels eines Aktivierungssignals 121 gesendet werden, die diese Zeitdifferenz T so interpretiert, dass sie erst nach Verstreichen der Zeitdifferenz T die Datenübertragungseinrichtung 110 sich aktiviert. Alternativ kann der Aufweckempfänger 120 ausgebildet sein, um das Aussenden des Aktivierungssignals 121 solange zu warten, bis die Zeitdauer T verstrichen ist.

Im Folgenden werden die detaillierten Abläufe gemäß Ausführungsbeispielen genauer beschrieben.

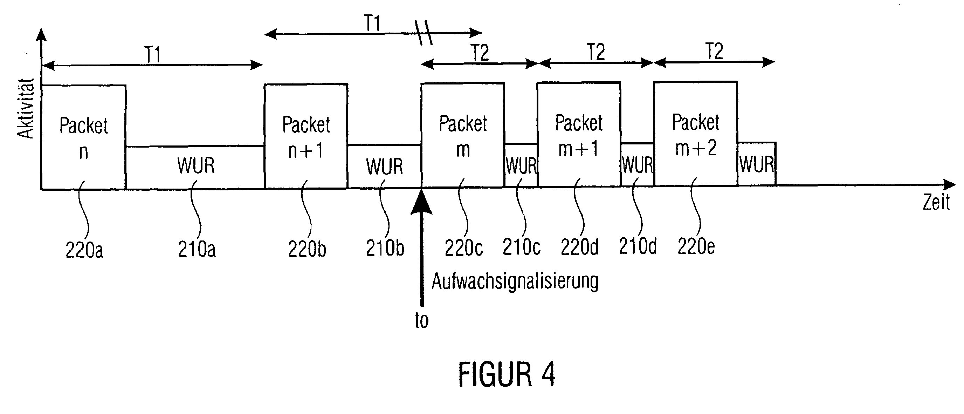

Fig. 4 zeigt ein Ausführungsbeispiel zur Aktivierung eines synchronen Netzwerks ohne Synchronisationsverlust. Bis zur Aufwachsignalisierung zum Zeitpunkt t0 nutzte das Netzwerk beispielsweise den bisherigen TDMA-Zugriff mit der Periodendauer T1, wie er beispielsweise in der Fig. 2 gezeigt ist. Bis zu diesem Zeitpunkt t0 war die Periodendauer T1 und mit der Aufwachsignalisierung zu dem Zeitpunkt t0 soll ein Wechsel zur Periodendauer T2 erfolgen, die beispielsweise kürzer oder aber auch länger sein kann, um beispielsweise einen größeren Datendurchsatz zu erreichen. Dies bedeutet eine Modifikation der Übertragungsparameter und insbesondere des Duty-Cycles, da beispielsweise der Anteil des Betriebszustands 220 an der Periodendauer T2 größer oder auch kleiner sein könnte. Im Detail zeigt die Fig. 4, dass in einem ersten Zeitschlitz 220a ein Paket n übertragen wird, in einem zweiten Zeitschlitz 220b, der nach der Periodendauer T1 nach dem Beginn des ersten Zeitschlitzes 220a anfängt, erfolgt eine Übertragung des Pakets n + 1. Zwischen dem ersten Zeitschlitz 220a und dem zweiten Zeitschlitz 220b ist eine erste Ruhephase 210a und eine zweite Ruhephase 210b folgt im Anschluss an die Übertragung des Paketes n + 1. Der Aufweckempfänger 120 (WUR) ist beispielsweise lediglich innerhalb der Ruhephasen 210 aktiviert (alternativ kann der Aufweckempfänger 120 auch ständig aktiviert sein).

Innerhalb der zweiten Ruhephase 210b liegt die Zeit t0, zu der die Aufwachsignalisierung durch Aussenden des Initiierungssignals 125 erfolgt, wobei das Initiierungssignal 125 als Datenübertragungsinformation 230 beispielsweise die Information enthält, dass von der ersten Periodendauer T1 auf die zweite Periodendauer T2 gewechselt werden soll und dass zum Zeitpunkt t0 mit der Übertragung des Pakets m begonnen werden kann (optional kann auch eine Änderung in der Zeitschlitzlänger erfolgen). Somit überträgt die Datenübertragungseinrichtung 110, angefangen von dem Zeitpunkt t0, in einem dritten Zeitschlitz 220c das Paket m, woran sich eine dritte Ruhephase 210c anschießt, so dass die dritte Ruhephase 210c und der dritte Zeitschlitz oder der dritte Betriebszustand 220c zusammen die zweite Periodendauer T2 bilden. Die Zeitschlitze 220 können beispielsweise nach dem Wechsel der Periodendauer von T1 nach T2 kürzer oder länger gewählt sein. Ebenso können sich die Ruhephasen 210 ändern. Nach der zweiten Periodendauer T2 erfolgt in einem vierten Zeitschlitz 220d die Übertragung des Pakets m + 1 und in einem fünften Zeitschlitz 220e die Übertragung des Pakets m + 2. Zwischen dem vierten und fünften Zeitschlitz 220d, 220e ist eine vierte Ruhephase 210d gebildet.

Die Aktivierung eines synchronen Netzwerks, wie es bis zum Zeitpunkt t0 der Fall war, kann somit ohne Synchronisationsverluste erfolgen.

Daher wird das Wake-up-Signal (Initiierungssignals 125) vom Aufweckempfänger 120 zum Zeitpunkt t0 oder früher detektiert (der Funkknoten befindet sich im Schlafmodus). Das Wake-up-Signal 125 enthält Zusatzinformationen 230 darüber, wann beispielsweise die nächste Kommunikation im Netzwerk 200 möglich ist und wie die Übertragungsparameter für diese Übertragung gewählt werden müssen.

Der Aufweckempfänger 120 aktiviert den Netzwerkknoten 100. Dieser aktiviert seinen Hauptempfänger 110 exakt zu Beginn des im Wake-up-Signal mitgeteilten Zeitpunktes t0 (nächster Zeitschlitz). Daher kann der Funkknoten 100 an der nächsten Kommunikation im Netzwerk teilnehmen, ohne sich vorher neu zu synchronisieren. Da der Knoten zuvor bereits synchron war, kann er somit sofort im nächsten Zeitschlitz 220c an der Kommunikation teilnehmen.

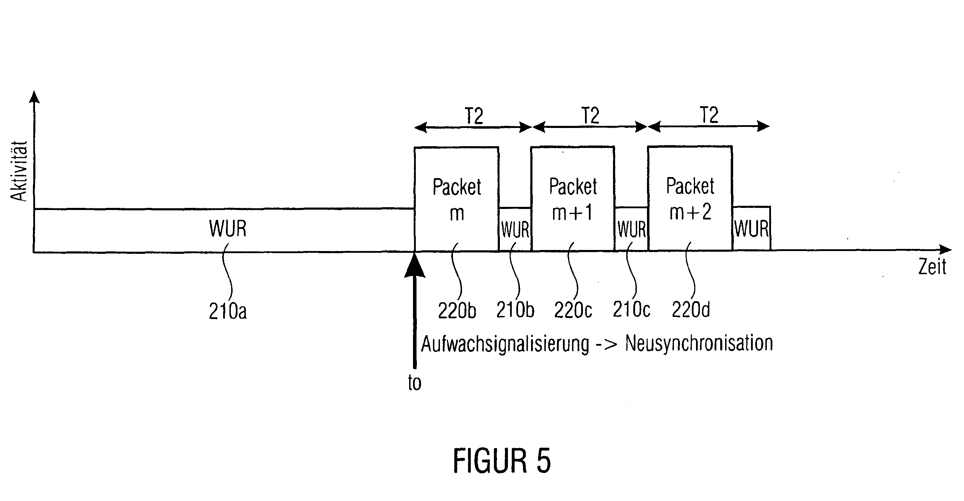

Fig. 5 zeigt ein Ausführungsbeispiel für eine Aktivierung eines vorher nicht synchronen Netzwerks, bei dem während der ersten Ruhephase 210a, indem der Aufweckempfänger 120 aktive ist, der Zeitpunkt t0 der nächsten Zeitschlitzes 220a mitgeteilt wird. Die Übertragungsparameter (beispielsweise wiederum die zweite Periodendauer T2) können wie zuvor auch mittels des Initiierungssignals 125 (Datenübertragungsinformation als Zusatzinformation 230) mitgeteilt werden.

Daher wird das Wake-up-Signal 125 vom Aufweckempfänger 120 detektiert (der Funkknoten 100 befindet sich im Schlafmodus 210a).

Enthält das Wake-up-Signal 125 keine weiteren Zusatzinformationen, so aktiviert der Aufweckempfänger nur den Netzwerkknoten 100 und veranlasst ihn zur Neusynchronisation. Das heißt, der Hauptempfänger 110 wird dauerhaft oder im TDMA-Verfahren aktiviert, um ein Synchronisationssignal (z. B. Beacon) zu detektieren. In Folge wird sich der Funkknoten 100 auf den Taktgeber des Netzwerks 310 synchronisieren (siehe Fig. 3) und das Netzwerk 200 wird aufgebaut.

Enthält das Wake-up-Signal 125 Zusatzinformationen 230 über den Beginn des nächsten Zeitschlitzes (z. B. t0), so aktiviert der Funkknoten 100 seinen Empfänger 110 gezielt zu diesem Zeitpunkt, um das Synchronisationssignal zu empfangen.

Die Signalisierung kann beispielsweise Zusatzinformationen 230 darüber enthalten, welche Übertragungsparameter (z. B. Periode T2) ab dem nächsten Zeitschlitz 220a gewählt werden sollen. Der Aufweckempfänger 120 veranlasst den Funkknoten 100, sich auf diese einzustellen.

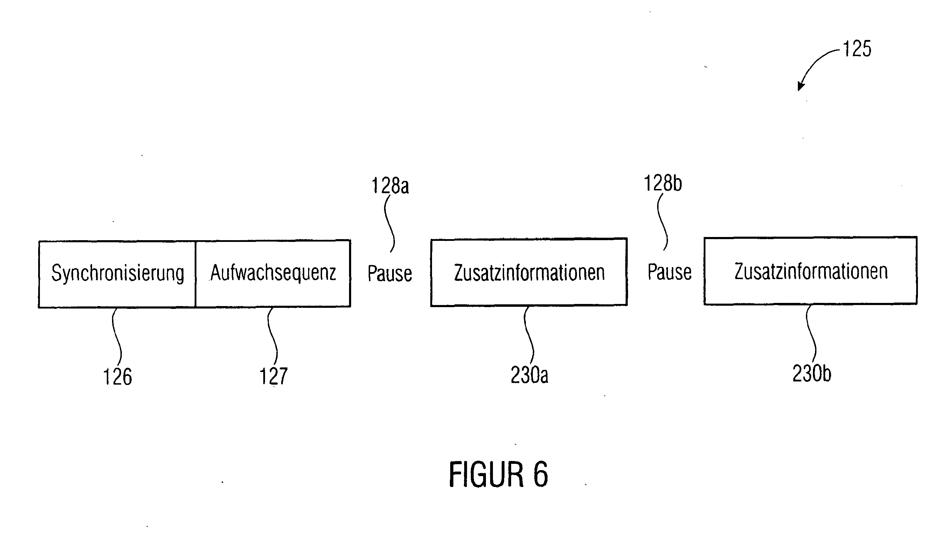

Fig. 6 zeigt schematisch einen möglichen Aufbau des Initiierungssignals 125. Beispielsweise kann das Initiierungssignal 125 zunächst eine Synchronisation oder ein Synchronisationssignal 126 aufweisen, welches von einer Aufwecksequenz 127 gefolgt wird. Nach einer optionalen ersten Pause 128a weist das Initiierungssignal 125 eine erste Zusatzinformation 230a auf und nach einer zweiten weiteren optionalen Pause 128b weist das Initiierungssignal 125 eine zweite Zusatzinformation 230b auf. Diese Sequenz kann sich fortsetzen, bis alle gewünschten Zusatzinformationen 230 durch das Initiierungssignal 125 übertragen sind. Die Synchronisierung 126 kann beispielsweise einen Zeitstempel und/oder ein Netzwerkidentifikationssignal aufweisen, die Aufwecksequenz 127 kann beispielsweise eine bestimmte Datensequenz aufweisen, die das Signal als eine Aufwachsequenz für ein bestimmtes Netzwerk und/oder einen Netzwerkknoten identifizieren. Nachdem diese ersten beiden Abschnitte des Initiierungssignals 125 erfasst wurden, ist dem Netzwerkknoten bekannt, dass es sich um ein Aufwachsignal handelt und wartet auf Zusatzinformationen 230, die beispielsweise nach einer Pause 128 in dem Initiierungssignal enthalten sein können.

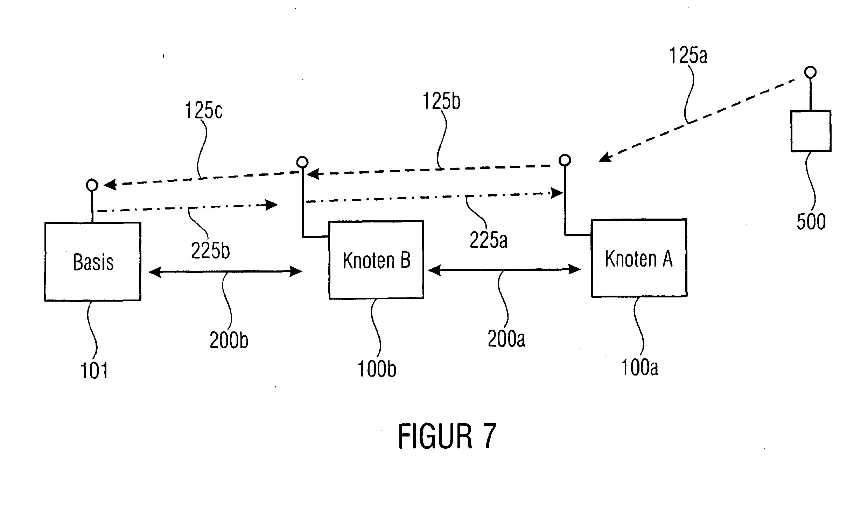

Fig. 7 zeigt schließlich ein Ausführungsbeispiel, bei dem nacheinander mehrere Netzwerkknoten aktiviert werden. Die Aktivierung kann beispielsweise mittels eines Sensors 500 oder eines Sensorknotens initiiert werden. Beispielsweise kann der Sensor 500 ein Sensorsignal detektieren (z. B. von einer Lichtschranke, einem Bewegungsmelder, einem Thermometer oder andere Sensoren), aufgrund dessen der Sensor 500 das erste Initiierungssignal 125a aussendet. Das erste Initiierungssignal 125a wird von dem ersten Knoten 100a empfangen und ansprechend auf das Empfangen des ersten Initiierungssignals 125a sendet der erste Knoten 100a ein zweites Initiierungssignal 125b aus, welches durch einen zweiten Knoten 100b empfangen wird, der seinerseits ein drittes Initiierungssignal 125c aussendet. Diese Schrittfolge kann fortgesetzt werden. Ein Masterknoten 101 (Basis oder Basisknoten) empfängt beispielsweise das dritte Initiierungssignal 125c und dient anschließend als Steuerknoten zur Synchronisierung des Netzwerks. Beispielsweise legt der Masterknoten 101 die Datenübertragungsparameter fest und/oder sendet zur Synchronisation das Beacon-Signal 310. Die Synchronisation kann beispielsweise dadurch geschehen, dass der Masterknoten 101 ein weiteres Initiierungssignal 225b zurücksendet, welches beispielsweise durch den zweiten Knoten 100b empfangen wird, und der zweite Knoten 100b ausgebildet ist, aus dem weiteren Initiierungssignal 225b die Datenübertragungsinformationen 230 zu extrahieren und für den zweiten Knoten 100b anzuwenden. Gleichzeitig sendet der zweite Knoten 100b ein zweites weiteres Initiierungssignal 225a aus, welches von dem ersten Knoten 100a empfangen wird, der seinerseits aus dem zweiten weiteren Initiierungssignal 225a Datenübertragungsinformationen 230a extrahiert. Mit den weiteren Initiierungssignalen 225 werden dann beispielsweise die Netzwerkparameter übertragen, so dass alle Knoten beispielsweise die Zeitpunkte der Datenübertragung kennen (jeder Knoten kann beispielsweise geeignete Zeitschlitze zugeordnet bekommen haben). Die Datenübertragung 200a zwischen dem ersten Knoten 100a und dem zweiten Knoten 100b kann dann durch die Datenübertragungseinrichtung 110a des ersten Netzwerkknotens 100a und der Datenübertragungseinrichtung 100b des zweiten Netzwerkknotens 100b hergestellt werden. Alternativ wird die Datenübertragung 200 nicht direkt zwischen den einzelnen Netzwerkknoten hergestellt, sondern kann aufgrund der höheren Sendeleistung auch direkt zur Basis, zu anderen Netzwerkknoten bzw. zu einem weiteren Empfängern hergestellt werden.

Somit ist in der Fig. 7 ein Ausführungsbeispiel gezeigt, bei dem beispielsweise der Masterknoten 101 sich sehr weit von dem Sensorknoten 500 entfernt befindet, so dass das Initiierungssignal oder Sensorsignal 125 von dem Sensor 500 nicht direkt den Masterknoten 101 erreicht, sondern dass sukzessive von einem Netzwerkknoten 100 zu dem nächsten Netzwerkknoten das Sensorsignal zu übertragen ist. Gleichzeitig kann zusammen mit dem Initiierungssignal 125 ein Wunsch geäußert werden, um beispielsweise eine möglichst breitbandige Verbindung herzustellen oder eine breitbandige Verbindung zu einem spezifischen Empfänger herzustellen. Diese Information wird beispielsweise an den Masterknoten 101 weitergeleitet, der dann die Kontrolle über die Herstellung der gewünschten Verbindung übernimmt. Der Masterknoten 101 kann dann zum einen die Taktsignale (Beacon-Signale 310) aussenden und andererseits den einzelnen Netzwerkknoten 100 mitteilen, zu welchem Zeitpunkt die Synchronisationssignale zu erwarten sind. Dies geschieht mit den weiteren Initiierungssignalen 225, die angefangen von dem Masterknoten 101 wiederum sukzessive durch das ganze Netzwerk hindurch übertragen werden. Somit unterscheiden sich die einzelnen Initiierungssignale 125 und 225 dadurch, dass die ersten Initiierungssignale 125 zunächst das Sensorereignis signalisieren und außerdem Zusatzinformationen aufweisen können, wie beispielsweise die erforderliche Bandbreite (z. B. um eine Kamera online zu schalten, um anschließend das Videosignal an einen Empfänger zu übertragen) beinhalten. Andererseits weisen die weiteren Initiierungssignale 225 knotenspezifische Daten auf und/oder Informationen, die den Netzwerkknoten mitteilen, wann die Synchronisationssignale (Beacon-Signale 310) zu erwarten sind.

Da die Aufweckempfänger 120 lediglich eine Reichweite bis zu einem nächsten Knoten aufweisen brauchen, können die Aufweckempfänger sehr klein und energiesparsam ausgebildet sein. Zum Beispiel kann der Energieverbrauch der Aufweckempfänger 120 um einen Faktor 10 oder 100 oder 1000 kleiner sein als der Energieverbrauch der Datenübertragungseinrichtung 110 (z.B. ein Stromverbrauch von weniger als 100 µA). Dies bedeutet gleichzeitig, dass beispielsweise auch die Reichweite der Aufweckempfänger lediglich zwischen 10 und 200 Meter liegen oder alternativ zwischen 20 und 60 Metern oder ca. 30 Meter zu betragen braucht. Andererseits kann beispielsweise die Datenübertragungseinrichtung 110 ausgebildet sein, um eine Sendeleistung bereitzustellen, so dass eine Vielzahl von Netzwerkknoten in der Lage ist, die Daten eines sendenden Netzwerkknotens zu empfangen oder zumindest, dass der Masterknoten 101 in der Lage ist, die gesendeten Daten zu empfangen.

Bei weiteren Ausführungsbeispielen ist ebenfalls der Masterknoten 101 in einer Ruhephase und wartet auf das erste Aktivierungssignal 125, welches beispielsweise ein Sensorereignis signalisiert. Erst zu diesem Zeitpunkt des Empfangs des ersten Initiierungssignals 125 braucht beispielsweise der Masterknoten 101 die Taktsignale 310 zur Synchronisierung aussenden, so dass während der Ruhephase oder des Ruhezustands 210 keine Synchronisationssignale gesendet werden. Durch das Übertragen der zweiten Initiierungssignale 225 kann dann bei diesem Ausführungsbeispiel die Information mitgeteilt werden, wann die Synchronisationssignale zu erwarten sind - oder wann der Masterknoten 101 die Synchronisationstaktsignale aussendet. Die einzelnen Knoten übernehmen dann die Framelänge, wie sie beispielsweise durch die Synchronisationssignale vorgegeben sind. Bei dem konventionellen TDMA-Verfahren beträgt die Framelänge beispielsweise mehrere Minuten, in denen lediglich für ein paar Millisekunden eine Übertragungszeit für einen gegebenen Knoten zur Verfügung steht. Das heißt, dass im Alarmfall bei den konventionellen Verfahren erst nach mehreren Minuten eine Übertragung stattfinden kann.

Bei weiteren Ausführungsbeispielen weist lediglich die Datenübertragungseinrichtung 110 eine Sendeeinheit auf und der Aufweckempfänger 120 ist nur ausgebildet, um das Aufwecksignal zu empfangen.

Die in den Fig. 2 bis 7 gezeigten Ausführungsbeispiele der vorliegenden Erfindung, die die detaillierten Abläufe genauer beschreiben, können auch wie folgt zusammengefasst werden.

Das beschriebene Verfahren verwendet eine spezielle Wake-up-Signalisierung. Das Wake-up-Signal kann verschiedene Zusatzinformationen 230 enthalten, die es erlauben, die Funkknoten 100 in ihrer Funktion zu beeinflussen.

Die Wake-up-Signalisierung kann z. B. Zusatzinformationen 230 darüber enthalten, wann der nächste Zeitschlitz (z. B. Beacon) zu erwarten ist und z. B. eine Datenübertragung im Netz möglich ist. Der Taktgeber im Netzwerk kann demnach z. B. beim Eintreten eines bestimmten Ereignisses den Zeitpunkt des nächsten Zeitschlitzes vorverlegen und dies durch ein Wake-up-Signal 125 mitteilen (siehe Fig. 4). Ergänzend hierzu können die Übertragungsparameter, durch in der Wake-up-Signalisierung enthaltenen Zusatzinformationen 230, für die folgende Datenkommunikation neu gewählt werden.

Da dem Funkknoten 100 beim Empfang des Wake-up-Signals 125 bekannt ist, wann der nächste Zeitschlitz beginnt und wie die Übertragungsparameter zu wählen sind, kann er stets den nächsten Zeitschlitz zur Kommunikation nutzen, auch wenn dieser nicht mehr dem bisherigen TDMA-Zugriffsschema folgt.

Ist der Funkknoten 100 bereits synchron, kann er sich auf das neue Zeitverhalten und die Übertragungsparameter einstellen, ohne seine Synchronizität zum Netzwerk zu verlieren. Ein vorher nicht synchroner Funkknoten 100 muss nicht nach dem Empfang Wake-up-Signals 125 den Hauptempfänger 110 aktivieren, um irgendwann später eine Synchronisationsnachricht zu empfangen. Aus dem Wake-up-Signal 125 kann er den richtigen Zeitpunkt entnehmen und den Empfänger gezielt zu Beginn des Zeitschlitzes 220 aktivieren. Der Energieverbrauch während der Synchronisierung wird dadurch verringert.

Obwohl eine Datenübertragung weiterhin erst im nächsten Zeitschlitz möglich ist, kann eine Weiterleitung eines Ereignisses sehr schnell erfolgen, da der Zeitpunkt des nächsten Zeitschlitz frei gewählt werden kann und ggf. sehr schnell auf das Wake-up-Signal 125 folgen kann. Die Latenzzeit für die Weiterleitung des Ereignisses ist dann gering.

Durch die mögliche Verwendung anderer Übertragungsparameter kann nicht nur sehr schnell auf ein Ereignis reagiert werden (das Netzwerk kann mit kurzer Latenzzeit aktiviert werden), sondern es können speziell in Systemen mit sehr langen Schlafzeiten die Übertragungsparameter dynamisch je nach geplantem Datenaufkommen nach jeder Wake-up-Signalisierung gesetzt werden. So kann z. B. ein Netzwerk mit niedrigem Duty-Cycle arbeiten, bis ein bestimmtes Ereignis eintritt. Ist dies der Fall, kann das Netzwerk mit geringer Latenz aktiviert werden und z. B. mit hohem Duty-Cycle eine Datenübertragung von begrenzter Dauer durchführen.

Bei einem weiteren Ausführungsbeispiel ist es ebenfalls möglich, nicht direkt die Rahmenlänge bzw. den Zeitperiode des nächsten Synchronisationssignals zu übertragen, sondern stattdessen lediglich den Zeitpunkt zu übertragen, an welchem keine Übertragung stattfindet. Ein weiterer Netzwerkknoten kann daraus schließen, dass der Zeitraum, in welchem keine Übertragung stattfindet, zur Übertragung zur Verfügung steht und blockiert seinerseits einen Teil dieses freien Slots. Daran anschließend überträgt der Netzwerkknoten noch den verbleibenden Zeitraum, in welchem immer noch keine Übertragung stattfindet, so dass der nächste Netzwerkknoten sich innerhalb dieses freien Slots sich seinerseits einen eigenen Slot zur Datenübertragung heraussucht.

Ein wesentlicher Vorteil der vorliegenden Erfindung besteht darin, dass die Rahmenlänge sehr lang gemacht werden kann, so dass die einzelnen Netzwerkknoten 100 fast ausschließlich sich im Ruhezustand 210 befinden. Alternativ ist es sogar möglich, dass die einzelnen Netzwerkknoten vollkommen asynchron sind und ausgeschaltet bzw. sich im Ruhezustand 210 befinden und lediglich bei einer Aktivierung sich miteinander synchronisieren. Trotz der langen Ruhephasen ist es bei Ausführungsbeispielen demnach möglich, dass ein Alarm schnell weitergeleitet werden kann, da die Übertragung der Initiierungssignale 125 und der weiteren Initiierungssignale 225 sehr schnell erfolgt. Im Gegensatz dazu war bei konventionellen Verfahren stets eine Wartezeit abzuwarten, bis dass dem nächsten Zeitschlitz eine Datenübertragung zur Verfügung stand. Die Zusatzinformation 230, die nach Ausführungsbeispielen zusammen mit dem Initiierungssignal 125 (oder dem zweiten Initiierungssignal 225) übertragen wird, kann beispielsweise ebenfalls eine IP-Adresse oder das Rahmenformat umfassen.

Vorteile der Ausführungsbeispiele können auch wie folgt zusammengefasst werden. Das erfindungsgemäße Verfahren erlaubt in Verbindung mit einem geeigneten Aufweckempfänger 120 den Empfang und die Auswertung von wake-up-Signalen 125 zu jeder Zeit. Bei gewöhnlichen Systemen mit TDMA-Verfahren ist ein Empfang nur zu diskreten Zeitpunkten (Zeitschlitz 220) möglich, um den Energieverbrauch zu reduzieren.

Somit lassen sich synchrone Netze mit niedrigem Duty-Cycle (lange Schlafzeiten, niedriger Stromverbrauch) und niedrigem Energieverbrauch realisieren, die eine niederfrequente Aufgabe (wie beispielsweise Datenübertragung einmal pro Stunde) erledigen, aber durch ein entsprechendes Ereignis jederzeit auch außerhalb ihrer Aktivzeiten aktiviert werden können (z.B. Alarm-Ereignis). Trotz normalerweise langer Latenzzeiten können wichtige Ereignisse schnell weitergemeldet werden. Durch die Einstellmöglichkeiten der Übertragungsparameter ist zudem eine dynamische Anpassung an die zu erwartenden Aufgaben (z.B. Datenmenge) möglich.

Da einem aufwachenden Knoten 100 bekannt gemacht wird, wann die nächste Synchronisationsnachricht zu erwarten bzw. die nächste Übertragung möglich und welche Übertragungsparameter dabei zu verwenden sind, ist der Knoten 100 ab diesem Zeitpunkt synchron zum übrigen Netzwerk. Dies gilt auch dann, wenn es vorher nicht synchron zum übrigen Netzwerk war. Daher können ab diesem Zeitpunkt (Zeitschlitz) aktiv Daten weitergeleitet werden. Ein vorher synchrones Netzwerk verliert seine Synchronizität nicht. Ein vorher nicht synchrones Netz erlangt die Synchronizität mit einem geringeren Energieverbrauch.

Der Stromverbrauch beim Aufbau von vorher nicht synchronen Netzen ist deshalb geringer, weil der Zeitpunkt der nächsten Synchronisationsnachricht im wake-up-Signal mitgeteilt wird und auf ein langes "Hören" bis zum Empfang der nächsten Synchronisationsnachricht verzichtet werden kann.

Ausführungsbeispiele umfassen ebenfalls ein Verfahren zum Aktivieren einer Datenübertragung, wobei das Verfahren ein Empfangen eines Initiierungssignal 125 durch den Aufweckempfänger 120 während des Ruhezustands 210 der Datenübertragungseinrichtung 100, ein Extrahieren der Datenübertragungsinformation 230 aus dem Initiierungssignal 125 und ein Aktivieren der Datenübertragungseinrichtung 110 ansprechend auf das Initiierungssignals 125, um von dem Ruhezustand 210 in einen Betriebszustand 220 zu wechseln, um in dem Betriebszustand 220 eine Datenübertragung 200 mit einem Kommunikationspartner durchzuführen, aufweist. Die Datenübertragungsinformation 230 weist den Zeitpunkt für das Aktivieren der Datenübertragungseinrichtung 110 auf oder die Datenübertragungseinrichtung 110 wird so aktiviert, dass die Datenübertragung 200 abhängig von den Datenübertragungsinformation 230 durchführbar ist.

Obige Ausführungsbeispiele bezogen sich auf ein Datenübertragungssystem aus Datenübertragungsvorrichtungen, von denen eine als besonderer Knoten ausgezeichnet war, nämlich der Masterknoten 101. Dieser Masterknoten war bei diesen Systemen dafür zuständig, die Synchronisationszeitbasis zu liefern. Datenübertragungsvorrichtungen außer dem Masterknoten besaßen einen Aufweckempfänger 120 mit einem Sender, um ansprechend auf den Empfang eines ankommenden Initiierungssignals ein Folgeinitiierungsssignal durch den Sender auszusenden, wobei die beiden Initiierungssignale Informationen aufwiesen, die mitteilten, wann die Synchronisationssignale zu erwarten sind, die dann von der jeweiligen zugehörigen Datenübertragungseinrichtung zu empfangen waren. Die Synchronisationssignale wurden von dem Masterknoten 101 intermittierend oder sogar periodisch ausgesendet. Wie im Vorhergehenden ebenfalls erwähnt, kann der Zeitpunkt in diesen Initiierungssignalen, d.h. der Zeitpunkt, an dem beispielsweise das erste der Synchronisationssignale zu erwarten ist, in Form einer Zeitspanne bzw. einer Zeitdauer angegeben sein, die bis zum Aussenden des ersten Synchronisationssignals vergeht. Eintreffendes Initiierungssignal und Folgeinitiierungsssignal können eventuell voneinander abweichen, um die Zeitdauer zu berücksichtigen, die vom Empfang des ankommenden Initiierungssignals bis zum Aussenden des Folgeinitiierungsssignals vergeht. In dem Fall von Fig. 7 war der Knoten B ein Knoten, der diese entsprechende Eigenschaft besaß, aber natürlich können in dem System von Fig. 7 viele solcher Knoten existieren.

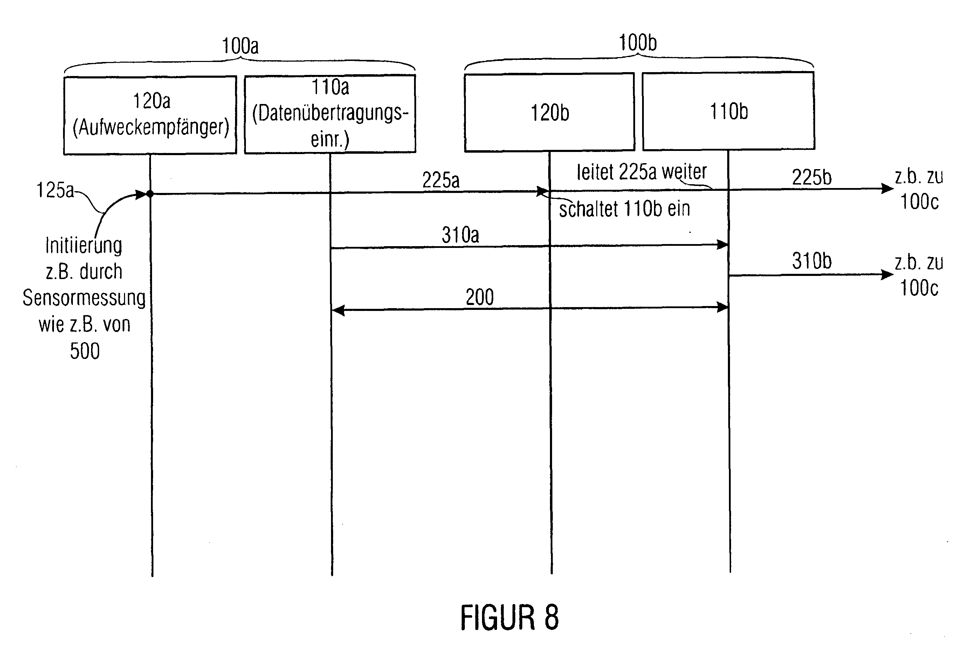

Fig. 8 zeigt nun ein zu dem System von Fig. 7 alternatives System. Es unterscheidet sich von dem System nach Fig. 7 dadurch, dass prinzipiell jeder Knoten 100a, 100b als Masterknoten fungieren kann. In Fig. 8 sind exemplarisch nur zwei Knoten 100a und 100b gezeigt, aber das System nach Fig. 8 kann ebenso wie das System nach Fig. 7 natürlich mehr als nur zwei Knoten umfassen. Und eben kann jeder dieser Knoten 100a und 100b die Rolle des Masterknoten von Fig. 7 übernehmen. Wer dies ist, hängt lediglich davon ab, wer aufgrund beispielsweise einer Sensormessung ein erstes Initiierungssignal 125a enthält. Das System von Fig. 8 umfasst also beispielsweise eine Vielzahl von Datenübertragungsvorrichtungen 100a-100c bzw. Knoten sowie eine Vielzahl von beispielsweise Sensoren 500, wie sie in Fig. 7 gezeigt waren. Jeder Sensor 500 detektiert ständig ein Sensorsignal und sendet aufgrund dessen ein Initiierungssignal 125a aus, beispielsweise wenn ein bestimmtes Sensorereignis in dem Sensorsignal detektiert wird, wie z.B. das Detektieren einer Rauchentwicklung, eine Hitzeüberschreitung oder dergleichen. Dann gibt der Sensor 500 das Initiierungssignal 125a aus, das beispielsweise den nächstgelegenen Knoten 100a erreicht. Dieser übernimmt nun die Aufgabe des Masterknoten. Es muss der Knoten 100a zuvor nicht der Masterknoten gewesen sein. Dies mag vielleicht ein anderer Knoten gewesen sein, wie z.B. der Knoten 100b. Zudem kann die Zeitdauer seit der letzten Datenkommunikation über die jeweiligen Datenübertragungseinrichtungen 110 der Datenübertragungsvorrichtungen 100a-100c schon sehr lange her sein, so dass ohnehin keine Synchronisation mehr vorliegt. Das macht aber auch nichts, denn die Synchronisation wird erst jetzt einfach durch den Knoten 100a aufgebaut, wie es im Vorhergehenden bezüglich Fig. 7 ausgehend von der Basis 101 beschrieben worden ist. Das heißt, der Aufweckempfänger 120a sendet ein entsprechendes Initiierungssignal 225a an den Knoten 100b aus, der mit seinem Aufweckempfänger 120b dieses Initiierungssignal 225a empfängt. Es enthält eine Information darüber, wann die Datenübertragungseinrichtung 110a des Knotens 100a das Synchronisationssignal 310a aussenden wird, d.h. beispielsweise das erste Synchronisationssignal einer periodischen Folge von Synchronisationssignalen, die bei der bevorstehenden Kommunikation der Knoten 100a ausgesendet wird. Der Knoten 100b empfängt durch den Aufweckempfänger 120b das Initiierungssignal 225a und macht zweierlei, nämlich der Aufweckempfänger 120b leitet das Initiierungssignal 225a in Form des Initiierungssignals 225b weiter, indem er letzteres aussendet, wie z.B. zu dem Knoten 100c des Systems, der in Fig. 8 jedoch nicht gezeigt ist, und schaltet darüber hinaus die Datenübertragungseinrichtung 110b des Knotens 100b ein, und zwar rechtzeitig vor dem angekündigten Empfang des Synchronisationssignals 310a. Das folgt dann zu dem angegebenen Zeitpunkt. Das heißt, die Datenübertragungseinrichtung 110a des Knotens 100a sendet das Synchronisationssignal 310a zu dem angekündigten Zeitpunkt aus, woraufhin dieses von der rechtzeitig aufgeweckten Datenübertragungseinrichtung 110b des Knotens 100b empfangen wird. Der Knoten 100b leitet das Synchronisationssignal 310a dann weiter, nämlich in Form des Synchronisationssignals 310b. Die Knoten 100a und 100b sind dann bereits synchronisiert, und zwischen denselben kann eine Kommunikation 200 stattfinden.

Wie es im Vorhergehenden beschrieben wurde, kann die Zeitdauerangabe in der Kopie 225b von der in 225a abweichen, nämlich von dem Weiterleitungszeitversatz auszugleichen. Ferner ist es möglich, dass der Aufweckempfänger die Kopie 225b nur weiterleitet, wenn die in dem Signal angegebene Zeitdauer eine vorbestimmte Schwelle unterschreitet, die es dem Knoten 100c nicht ermöglichte, rechtzeitig seinen Hauptempfänger 110c zum Empfangen des Synchronisationssignals 310 zu aktivieren. Reicht die Zeitdauer nicht aus, wird das Signal 225a modifiziert weitergeleitet, nämlich so, dass das weitergeleitete Signal die Zeitdauer bis zum übernächsten Synchronisierungssignal angibt.

An dieser Stelle sei auch noch darauf hingewiesen, dass im Vorhergehenden häufig beschrieben worden ist, dass die Aufweckempfänger auch einen Sendeteil bzw. Sender umfassen, der dann ein entsprechendes Initiierungssignal auch aussenden kann. In einer tatsächlichen Implementierung kann es sein, dass sich Aufweckempfänger und Datenübertragungseinrichtung eines jeweiligen Knotens größtenteils überlappen, wie z.B. in einem Großteil der Hardware. Aufweckempfänger und Datenübertragungseinrichtung unterscheiden sich beispielsweise nur graduell, wie z.B. in der niedrigeren Empfangsverstärkung und Sendeverstärkung des Aufweckempfängers, dem höheren Anteil an Fehlerschutzredundanz auf Seiten des Aufweckempfängers, und/oder dem kleineren Modulationsalphabet auf Seiten des Aufweckempfängers. Es ist beispielsweise möglich, dass das Aussenden der Initiierungssignale einen gleichen Leitungsverbrauch aufweist wie das Aussenden der Synchronisationssignale. Allerdings ist ein geringerer Leistungsverbrauch ebenfalls möglich. Jedenfalls aber kann der Aufweckempfänger die Initiierungssignale mit weniger Leistungsverbrauch empfangen, als der Hauptempfänger die Synchronisationssignale. Die Datenrate kann allerdings auf Seiten der Initiierungssignale bedeutend niedriger sein. Demzufolge ist es auch möglich, das der Grad oben erwähnter Überlappung auf Sendeseite größer ausfällt, als auf Empfangsseite. Empfangsseitig kann sich der Überlapp beispielsweise auf die Antenne beschränken, und sogar diese könnte getrennt für Aufweck- und Hauptempfänger vorgesehen sein.

Wie es also aus Fig. 8 und der zugehörigen Beschreibung klar wurde, ist es nicht unbedingt erforderlich, dass sich ein Knoten aus dem Knoten eines Systems von den anderen als Masterknoten hervorhebt. Wenn beispielsweise in dem Fall von Fig. 8 der Knoten 100b durch einen jeweiligen Sensor 500 durch ein entsprechendes Initiierungssignal 125a dazu gebracht worden wäre, ein entsprechendes Initiierungssignal 225a seinerseits an die Knoten 100a und 100c auszugeben, dann hätte dieser Knoten 100b daraufhin zu dem in diesem Initiierungssignal angegebenen Zeitpunkt (oder ein wenig danach) das Synchronisationssignal 310a an die Knoten 100a und 100c ausgegeben. Die Knoten 100a und 100c wären dann zu dem angegebenen Zeitpunkt durch ihre jeweiligen Aufweckempfänger aufgeweckt worden und hätten sich dann aufgrund des Synchronisationssignals von dem Knoten 100b auf den Knoten 100b einsynchronisiert. Wie zu erkennen ist, ist das Sensornetzwerk von Fig. 8 somit in der Lage, ständig schlafen zu können. Ein Aufbau einer Datenübertragung ist aufgrund eines Sensorereignisses von jedem einer Vielzahl von Sensoren möglich. Wo das Sensorereignis in der Vielzahl von eventuell sehr verteilt angeordneten Sensorknoten 500 auftritt, ist nach dem Ausführungsbeispiel von Fig. 8 unerheblich.

Somit beschreiben Ausführungsbeispiele ein Verfahren, welches beispielsweise eine funkgestützte Signalisierung durch eine Aufwachsequenz bereitstellt, die in einem stromsparenden Funkempfänger empfangen und erkannt werden kann. Der Aufwachsequenz schließt sich eine Zusatzinformation 230 an, die den Zeitpunkt des Einschaltens des Hauptempfängers für den regulären, voll funktionalen drahtlosen Sensornetzwerkbetrieb angibt. Dadurch entfällt eine neue Synchronisation der Netzwerkknoten. Gleichzeitig können Übertragungsparameter für das Funknetzwerkprotokoll übermittelt werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Datenübertragungsvorrichtung (100) mit:
einer Datenübertragungseinrichtung (110), die aktivierbar ist, um von einem Ruhezustand (210) in einen Betriebszustand (220) zu wechseln und in dem Betriebszustand (220) eine Datenübertragung (200) mit einem Kommunikationspartner durchzuführen; und
einem Aufweckempfänger (120), der ausgebildet ist, um während des Ruhezustands der Datenübertragungseinrichtung (110) für ein Initiierungssignal (225) empfangsbereit zu sein und ansprechend auf das Initiierungssignal (225) die Datenübertragungseinrichtung (110) zu aktivieren,
wobei der Aufweckempfänger (120) ausgebildet ist, um aus dem Initiierungssignal (225) eine Datenübertragungsinformation (230) zu extrahieren, um abhängig von der Datenübertragungsinformation (230) einen Zeitpunkt für die Aktivierung der Datenübertragungseinrichtung (110) zu ermitteln oder die Datenübertragungseinrichtung (110) so zu aktivieren, dass die Datenübertragungseinrichtung (110) die Datenübertragung (200) abhängig von den Datenübertragungsinformationen (230) durchführt,
wobei das Initiierungssignal (225) ein erstes Initiierungssignal (225a) ist und wobei die Datenübertragungsvorrichtung ausgebildet ist, um ansprechend auf den Empfang des ersten Initiierungssignals (225a) ein zweites Initiierungssignal (225b) auszusenden,
**dadurch gekennzeichnet, dass**
das erste und zweite Initiierungssignal Informationen aufweisen, die mitteilen, wann Synchronisationssignale zu erwarten sind, die von der Datenübertragungseinrichtung (110) zu empfangen sind, und
die Datenübertragungsvorrichtung so ausgebildet ist, dass die Informationen, die das erste und zweite Initiierungssignal aufweisen und mitteilen, wann Synchronisationssignale zu erwarten sind, in Form einer Zeitspanne angegeben sind, die bis zum Aussenden der Synchronisationssignale vergeht, und das erste und zweite Initiierungssignal dahingehend voneinander abweichen, dass die Zeitdauer berücksichtigt ist, die von einem Empfang des ersten Initiierungssignal bis zum Aussenden des zweiten Initiierungssignals vergeht.

2. Datenübertragungsvorrichtung (100) nach Anspruch 1, bei der der Aufweckempfänger (120) einen Energieverbrauch aufweist, der um zumindest einen Faktor 10 kleiner ist als ein Energieverbrauch der Datenübertragungseinrichtung (110) in dem Betriebszustand (220).

3. Datenübertragungsvorrichtung (100) nach Anspruch 1 oder Anspruch 2, bei der der Aufweckempfänger (120) ausgebildet ist, um ein Aktivierungssignal (121) an die Datenübertragungseinrichtung (110) zu senden und die Datenübertragungseinrichtung (110) ausgebildet ist, ansprechend auf das Aktivierungssignal (121) von dem Ruhezustand (210) in den Betriebszustand (220) zu wechseln.

4. Datenübertragungsvorrichtung (100) nach einem der vorhergehenden Ansprüche, bei der die Datenübertragungsinformation (230) eine Länge eines Zeitschlitzes oder eine Periodendauer (T1; T2) von zwei aufeinanderfolgenden Zeitschlitzen umfasst.

5. Datenübertragungsvorrichtung (100) nach einem der vorhergehende Ansprüche, die ausgebildet ist, um Daten mit weiteren Datenübertragungsvorrichtungen unter Nutzung eines TDMA-Verfahrens mit einer Periodendauer (T1) und einer Zeitschlitzlänge auszutauschen, wobei der Aufweckempfänger (120) ausgebildet ist, um eine geänderte Periodendauer (T2) und/oder eine geänderte Zeitschlitzlänge aus den Datenübertragungsinformationen (230) zu extrahieren und bei der die Datenübertragungseinrichtung (110) ausgebildet ist, um die Datenübertragung (200) unter Nutzung der geänderten Periodendauer (T2) und/oder geänderten Zeitschlitzlänge durchzuführen.

6. Datenübertragungsvorrichtung (100) nach einem der vorhergehenden Ansprüche, bei der der Zeitpunkt für die Aktivierung der Datenübertragungseinrichtung (110) ein Synchronisationszeitpunkt ist, zu dem ein Synchronisationssignal (310) empfangbar ist.

7. Datenübertragungsvorrichtung (100) nach einem der vorhergehenden Ansprüche, bei der die Datenübertragungsinformationen (230) eine Vielzahl von Zusatzinformationen aufweisen, die durch eine Pause (128) voneinander getrennt sind.

8. Datenübertragungssystem mit:
einer Vielzahl von Datenübertragungsvorrichtungen (100) nach einem der Ansprüche 1 bis 7; und
einem Masterknoten (101), der ausgebildet ist, um die Aktivierung der Datenübertragung (200) zu kontrollieren.

9. Datenübertragungssystem nach Anspruch 8, bei dem der Masterknoten (101) ausgebildet ist, ein periodisches Synchronisationssignal (310) auszusenden und um ein weiteres Initiierungssignal (225) auszusenden, wobei das weitere Initiierungssignal (225) eine Information über den Zeitpunkt des Aussendens des Synchronisationssignals (310) enthält.

10. Datenübertragungssystem nach Anspruch 8 oder Anspruch 9, das ferner einen Sensorknoten (500) zur Detektion eines Sensorsignals aufweist, wobei der Sensorknoten ausgebildet ist, um ansprechend auf das Sensorsignal das Initiierungssignal (125) zu senden und damit die Datenübertragungsvorrichtungen (100) zu aktivieren.

11. Datenübertragungssystem mit:
einer Vielzahl von Datenübertragungsvorrichtungen (100), von denen jede folgende Merkmale aufweist:
einen Datenübertragungseinrichtung (110), die aktivierbar ist, um von einem Ruhezustand (210) in einen Betriebszustand (220) zu wechseln und in dem Betriebszustand (220) eine Datenübertragung (200) mit einem Kommunikationspartner durchzuführen; und
einen Aufweckempfänger (120), der ausgebildet ist, um während des Ruhezustands der Datenübertragungseinrichtung (110) für ein erstes Initiierungssignal (225) empfangsbereit zu sein und ansprechend auf das erste Initiierungssignal (225) die Datenübertragungseinrichtung (110) zu aktivieren,
wobei der Aufweckempfänger (120) ausgebildet ist, um aus dem ersten Initiierungssignal (225) eine Datenübertragungsinformation (230) zu extrahieren, um abhängig von der Datenübertragungsinformation (230) einen Zeitpunkt für die Aktivierung der Datenübertragungseinrichtung (110) zu ermitteln oder die Datenübertragungseinrichtung (110) so zu aktivieren, dass die Datenübertragungseinrichtung (110) die Datenübertragung (200) abhängig von den Datenübertragungsinformationen (230) durchführt,
wobei das Initiierungssignal (225) ein erstes Initiierungssignal (225a) ist und wobei die jeweilige Datenübertragungsvorrichtung ausgebildet ist, um ansprechend auf den Empfang des ersten Initiierungssignals (225a) ein zweites Initiierungssignal (225b) auszusenden,
einer Vielzahl von Sensoren zum Detektieren eines Sensorsignals und Aussenden eines zweiten Initiierungssignals (125) aufgrund dessen,
wobei der Aufweckempfänger (120) jeder Datenübertragungsvorrichtung ferner ausgebildet ist, um während des Ruhezustands der Datenübertragungseinrichtung (110) auch für das zweite Initiierungssignal (125) empfangsbereit zu sein, und ansprechend auf das zweite Initiierungssignal (125) die Datenübertragungseinrichtung (110) so zu aktivieren, dass die Datenübertragungseinrichtung (110) Synchronisationssignale aussendet, wobei jede Datenübertragungsvorrichtung zusätzlich ausgebildet ist, um auf den Empfang des zweiten Initiierungssignals (125) hin ein erstes Initiierungssignal (225) auszusenden,
**dadurch gekennzeichnet, dass**
das erste und zweite Initiierungssignal Informationen aufweisen, die mitteilen, wann Synchronisationssignale zu erwarten sind, die von der Datenübertragungseinrichtung (110) zu empfangen sind, und
die jeweilige Datenübertragungsvorrichtung zudem so ausgebildet ist, dass die Informationen, die das erste und zweite Initiierungssignal aufweisen und mitteilen, wann Synchronisationssignale zu erwarten sind, in Form einer Zeitspanne angegeben sind, die bis zum Aussenden der Synchronisationssignale vergeht, und das erste und zweite Initiierungssignal dahingehend voneinander abweichen, dass die Zeitdauer berücksichtigt ist, die von einem Empfang des ersten Initiierungssignal bis zum Aussenden des zweiten Initiierungssignals vergeht.

12. Datenübertragungssystem nach Anspruch 11, bei dem jede Datenübertragungsvorrichtung so ausgebildet ist, dass das ausgesendete erste Initiierungssignal (225) mitteilt, wann die Synchronisationssignale zu erwarten sind, die von der Datenübertragungseinrichtung (110) der Datenübertragungsvorrichtung des jeweiligen Aufweckempfängers auf das zweite Initiierungssignal (125) hin ausgesendet werden.

13. Verfahren zur Aktivierung einer Datenübertragung (200) mit folgenden Schritten:
Empfangen eines Initiierungssignal (125) durch einen Aufweckempfänger (120) während des Ruhezustands (210) einer Datenübertragungseinrichtung (110);
Extrahieren einer Datenübertragungsinformation (230) aus dem Initiierungssignal (125); und
Aktivieren einer Datenübertragungseinrichtung (110) ansprechend auf das Initiierungssignals (125), um von dem Ruhezustand (210) in einen Betriebszustand (220) zu wechseln, um in dem Betriebszustand (220) eine Datenübertragung (200) mit einem Kommunikationspartner durchzuführen,
wobei die Datenübertragungsinformation (230) einen Zeitpunkt für das Aktivieren der Datenübertragungseinrichtung (110) aufweist oder die Datenübertragungseinrichtung (110) so aktiviert wird, dass die Datenübertragung (200) abhängig von den Datenübertragungsinformation (230) durchführbar ist,
wobei das Initiierungssignal (225) ein erstes Initiierungssignal (225a) ist und wobei ansprechend auf den Empfang des ersten Initiierungssignals (225a) ein zweites Initiierungssignal (225b) ausgesendet wird,
**dadurch gekennzeichnet, dass**
das erste und zweite Initiierungssignal Informationen aufweisen, die mitteilen, wann Synchronisationssignale zu erwarten sind, die von der Datenübertragungseinrichtung (110) zu empfangen sind, und
die Informationen, die das erste und zweite Initiierungssignal aufweisen und mitteilen, wann Synchronisationssignale zu erwarten sind, in Form einer Zeitspanne angegeben sind, die bis zum Aussenden der Synchronisationssignale vergeht, und das erste und zweite Initiierungssignal dahingehend voneinander abweichen, dass die Zeitdauer berücksichtigt ist, die von einem Empfang des ersten Initiierungssignal bis zum Aussenden des zweiten Initiierungssignals vergeht.

14. Verfahren nach Anspruch 13, bei dem der Zeitpunkt des Aktivierens nach einer Zeitdauer (T) nach dem Empfangen des Initiierungssignals (125) liegt und das Aktivieren erst zu dem Zeitpunkt des Aktivierens erfolgt.

15. Computerprogramm mit einem Programmcode zur Durchführung des Verfahrens nach Anspruch 13 oder Anspruch 14, wenn das Computerprogramm auf einem Computer abläuft.

## Claims

1. A data transmission device (100), comprising:
a data transmitter (110) which may be activated to change from an idle state (210) into an operating state (220) and to execute a data transmission (200) with a communication partner in the operating state (220); and
a wake-up receiver (120) which is implemented to be ready to receive for an initiation signal (225) during the idle state of the data transmitter (110) and to activate the data transmitter (110) in response to the initiation signal (225),
wherein the wake-up receiver (120) is implemented to extract data transmission information (230) from the initiation signal (225) to determine a time for activating the data transmitter (110) depending on the data transmission information (230) or to activate the data transmitter (110) such that the data transmitter (110) executes the data transmission (200) depending on the data transmission information (230),
wherein the initiation signal (225) is a first initiation signal (225a) and wherein the data transmission device is implemented to send out a second initiation signal (225b) in response to receiving the first initiation signal (225a),
**characterized in that**
the first and the second initiation signals comprise information which report when synchronization signals are to be expected which are to be received by the data transmitter (110), and
the data transmission device is implemented so that the information which comprise the first and second initiation signals and report when synchronization signals are to be expected, are given in the form of a time span which passes until sending out the synchronization signals, and that the first and second initiation signals deviate in so far as the time duration is considered which passes from receiving the first initiation signal until sending out the second initiation signal.

2. The data transmission device (100) according to claim 1, wherein the wake-up receiver (120) comprises an energy consumption which is smaller by a factor of at least 10 than an energy consumption of the data transmitter (110) in the operating state.

3. The data transmission device (100) according to claim 1 or claim 2, wherein the wake-up receiver (120) is implemented to transmit an activation signal (121) to the data transmitter (110) and wherein the data transmitter (110) is implemented to change from the idle state (210) into the operating state (220) in response to the activation signal (121).

4. The data transmission device (100) according to one of the preceding claims, wherein the data transmission information (230) comprises a length of a time slot or a period duration (T1; T2) of two subsequent time slots.

5. The data transmitter (100) according to one of the preceding claims, which is implemented to exchange data with further data transmission devices using a TDMA method with a period duration (T1) and a time slot length, the wake-up receiver (120) being implemented to extract a changed period duration (T2) and/or a changed time slot length from the data transmission information (230) and the data transmitter (110) being implemented to execute the data transmission (200) using the changed period duration (T2) and/or the changed time slot length.

6. The data transmission device (100) according to one of the preceding claims, wherein the time for the activation of the data transmitter (110) is a synchronization time at which a synchronization signal (310) may be received.

7. The data transmission device (100) according to one of the preceding claims, wherein the data transmission information (230) comprises a plurality of additional information separated from each other by a pause (128).

8. A data transmission system, comprising:
a plurality of data transmission devices (100) according to one of claims 1 to 7; and
a master node (101) which is implemented to control the activation of the data transmission (200).

9. The data transmission system according to claim 8, wherein the master node (101) is implemented to send out a periodic synchronization signal (310) and to send out a further initiation signal (225), wherein the further initiation signal (225) comprises information on the time of sending out the synchronization signal (310).

10. The data transmission system according to claim 8 or claim 9, further comprising a sensor node (500) for detecting a sensor signal, wherein the sensor node is implemented to transmit the initiation signal (125) in response to the sensor signal and thus activate the data transmission devices (100).

11. A data transmission system, comprising:
a plurality of data transmission devices (100), each of them comprising:
a data transmitter (110) which may be activated to change from an idle state (210) into an operating state (220) and to execute a data transmission (200) with a communication partner in the operating state (220); and
a wake-up receiver (120) which is implemented to be ready to receive for a first initiation signal (225) during the idle state of the data transmitter (110) and
to activate the data transmitter (110) in response to the first initiation signal (225),
wherein the wake-up receiver (120) is implemented to extract data transmission information (230) from the first initiation signal (225) to determine a time for activating the data transmitter (110) depending on the data transmission information (230) or to activate the data transmitter (110) such that the data transmitter (110) executes the data transmission (200) depending on the data transmission information (230),
wherein the initiation signal (225) is a first initiation signal (225a) and wherein the respective data transmission device is implemented to send out a second initiation signal (225b) in response to receiving the first initiation signal (225a),
a plurality of sensors for detecting a sensor signal and sending out a second initiation signal (125) based on the same,
wherein the wake-up receiver (120) of each data transmission device is further implemented to be ready to receive also for the second initiation signal (125) during the idle state of the data transmitter (110) and to activate the data transmitter (110) in response to the second initiation signal (125) such that the data transmitter (110) sends out synchronization signals, wherein each data transmission device is additionally implemented to send out a first initiation signal (225) upon receiving the second initiation signal (125),
**characterized in that**
the first and second initiation signals comprise information which report when synchronization signals are to be expected which are to be received by the data transmitter (110), and
the respective data transmission device is additionally implemented so that the information which comprise the first and second initiation signals and report when synchronization signals are to be expected are given in the form of a time span which passes until sending out the synchronization signals, and that the first and second initiation signals deviate in so far as the time duration is considered which passes from receiving the first initiation signal until sending out the second initiation signal.

12. The data transmission system according to claim 11, wherein each data transmission device is implemented such that the sent-out first initiation signal (225) reports when the synchronization signals are to be expected which are sent out by the data transmitter (110) of the data transmission device of the respective wake-up receiver upon the second initiation signal (125).

13. A method for activating a data transmission (200), comprising:
receiving an initiation signal (125) by a wake-up receiver (120) during the idle state (210) of a data transmitter (110);
extracting data transmission information (230) from the initiation signal (125); and
activating a data transmitter (110) in response to the initiation signal (125) to change from the idle state (210) into an operating state (220), to execute a data transmission (200) with a communication partner in the operating state (220),
wherein the data transmission information (230) comprises a time for activating the data transmitter (110) or the data transmitter (110) is activated such that the data transmission (200) may be executed depending on the data transmission information (230),
wherein the initiation signal (225) is a first initiation signal (225a) and wherein, in response to receiving the first initiation signal (225a), a second initiation signal (225b) is sent out,
**characterized in that**
the first and second initiation signals comprise information which reports when synchronization signals are to be expected which are to be received by the data transmitter (110), and
the information which comprises the first and second initiation signal and reports when synchronization signals are to be expected are given in the form of a time span which passes until sending out the synchronization signals, and the first and second initiation signals deviate in so far as the time duration is considered which passes from receiving the first initiation signal until sending out the second initiation signal.

14. The method according to claim 13, wherein the time of activating lies after a time duration (T) after receiving the initiation signal (125) and the activation is not executed until the time of activating.

15. A computer program comprising a program code for executing the method according to claim 13 or claim 14, when the computer program is executed on a computer.

## Revendications

1. Dispositif de transmission de données (100), comprenant:
un moyen de transmission de données (110) pouvant être activé pour passer d'un état de repos (210) à un état de fonctionnement (220) et pour réaliser, à l'état de fonctionnement (220), une transmission de données (200) avec un partenaire de communication; et
un récepteur de réveil (120) qui est réalisé pour être prêt à recevoir, pendant l'état de repos du moyen de transmission de données (110), un signal d'initiation (225) et pour activer, en réponse au signal d'initiation (225), le moyen de transmission de données (110),
dans lequel le récepteur de réveil (120) est réalisé pour extraire du signal d'initiation (225) une information de transmission de données (230) pour déterminer, en fonction de l'information de transmission de données (230), un moment pour l'activation du moyen de transmission de données (110) ou pour activer le moyen de transmission de données (110) de sorte que le moyen de transmission de données (110) effectue la transmission de données (200) en fonction des informations de transmission de données (230),
dans lequel le signal d'initiation (225) est un premier signal d'initiation (225a) et dans lequel le dispositif de transmission de données est réalisé pour émettre, en réponse à la réception du premier signal d'initiation (225a), un deuxième signal d'initiation (225b),
**caractérisé par le fait que**
le premier et le deuxième signal d'initiation présentent des informations qui communiquent quand doivent être attendus des signaux de synchronisation devant être reçus par le moyen de transmission de données (110), et
le dispositif de transmission de données est réalisé de sorte que les informations présentant le premier et le deuxième signal d'initiation et communiquant quand doivent être attendus les signaux de synchronisation soient indiqués sous forme d'un laps de temps qui s'écoule jusqu'à l'émission des signaux de synchronisation et que le premier et le deuxième signal d'initiation diffèrent l'un de l'autre en ce qu'il est tenu compte du laps de temps qui s'écoule d'une réception du premier signal d'initiation à l'émission du deuxième signal d'initiation.

2. Dispositif de transmission de données (100) selon la revendication 1, dans lequel le récepteur de réveil (120) présente une consommation d'énergie qui est inférieure d'au moins un facteur de 10 à une consommation d'énergie du moyen de transmission de données (110) à l'état de fonctionnement (220).

3. Dispositif de transmission de données (100) selon la revendication 1 ou la revendication 2, dans lequel le récepteur de réveil (120) est réalisé pour envoyer un signal d'activation (121) au moyen de transmission de données (110) et le moyen de transmission de données (110) est réalisé pour passer, en réponse au signal d'activation (121), de l'état de repos (210) à l'état de fonctionnement (220).

4. Dispositif de transmission de données (100) selon l'une des revendications précédentes, dans lequel l'information de transmission de données (230) comprend une longueur d'un intervalle de temps ou un laps de temps (T1; T2) de deux intervalles de temps successifs.

5. Dispositif de transmission de données (100) selon l'une des revendications précédentes, qui est réalisé pour échanger des données avec d'autres dispositifs de transmission de données à l'aide d'un procédé de TDMA avec un laps de temps (T1) et une longueur d'intervalle de temps, dans lequel le récepteur de réveil (120) est réalisé pour extraire une durée de période modifiée (T2) et/ou une longueur d'intervalle de temps modifiée des informations de transmission de données (230) et dans lequel le moyen de transmission de données (110) est réalisé pour effectuer la transmission de données (200) à l'aide de la durée de période modifiée (T2) et/ou de la longueur d'intervalle de temps modifiée.

6. Dispositif de transmission de données (100) selon l'une des revendications précédentes, dans lequel le moment pour l'activation du moyen de transmission de données (110) est un moment de synchronisation auquel peut être reçu un signal de synchronisation (310).

7. Dispositif de transmission de données (100) selon l'une des revendications précédentes, dans lequel les informations de transmission de données (230) présentent une pluralité d'informations additionnelles qui sont séparées l'une de l'autre par une pause (128).

8. Système de transmission de données, avec:
une pluralité de dispositifs de transmission de données (100) selon l'une des revendications 1 à 7; et
un noeud principal (101) qui est réalisé pour contrôler l'activation de la transmission des données (200).

9. Système de transmission de données selon la revendication 8, dans lequel le noeud principal (101) est réalisé pour émettre un signal de synchronisation périodique (310) et pour émettre un autre signal d'initiation (225), dans lequel l'autre signal d'initialisation (225) contient une information sur le moment d'émission du signal de synchronisation (310).

10. Système de transmission de données selon la revendication 8 ou la revendication 9, présentant par ailleurs un noeud de détection (500) destiné à détecter un signal de capteur, dans lequel le noeud de détection est réalisé pour envoyer, en réponse au signal de capteur, le signal d'initiation (125) et activer ainsi les moyens de transmission de données (100).

11. Système de transmission de données, avec:
une pluralité de dispositifs de transmission de données (100) présentant, chacun, les caractéristiques suivantes:
un moyen de transmission de données (110) qui peut être activé pour passer d'un état de repos (210) à un état de fonctionnement (220) et pour effectuer, à l'état de fonctionnement (220), une transmission de données (200) avec un partenaire de communication; et
un récepteur de réveil (120) qui est réalisé pour être prêt à recevoir, pendant l'état de repos du dispositif de transmission de données (110), un premier signal d'initiation (225) et pour activer, en réponse au premier signal d'initiation (225), le moyen de transmission de données (110),
dans lequel le récepteur de réveil (120) est réalisé pour extraire du premier signal d'initiation (225) une information de transmission de données (230), pour déterminer, en fonction de l'information de transmission de données (230), un moment pour l'activation du moyen de transmission de données (110) ou pour activer le moyen de transmission de données (110) de sorte que le moyen de transmission de données (110) effectue la transmission de données (200) en fonction des informations de transmission de données (230),
ledit signal d'initiation (225) étant un premier signal d'initiation (225a) et le dispositif de transmission de données respectif étant réalisé pour émettre, en réponse à la réception du premier signal d'initiation (225a), un deuxième signal d'initiation (225b),
une pluralité de capteurs destinés à détecter un signal de capteur et à émettre un deuxième signal d'initiation (125) à la suite de ce dernier,
dans lequel le récepteur de réveil (120) de chaque dispositif de transmission de données est réalisé par ailleurs pour être prêt à recevoir, pendant l'état de repos du moyen de transmission de données (110), également le deuxième signal d'initiation (125) et pour activer, en réponse au deuxième signal d'initiation (125), le moyen de transmission de données (110) de sorte que le moyen de transmission de données (110) émette des signaux de synchronisation, chaque dispositif de transmission de données étant en outre réalisé pour émettre, à la réception du deuxième signal d'initiation (125), un premier signal d'initiation (225),
**caractérisé par le fait que**
le premier et le deuxième signal d'initiation présentent des informations qui indiquent quand doivent être attendus des signaux de synchronisation devant être reçus par le moyen de transmission de données (110), et
le dispositif de transmission de données respectif est en outre réalisé de sorte que les informations qui présentent le premier et le deuxième signal d'initiation et communiquent quand doivent être attendus des signaux de synchronisation soient indiquées sous forme d'un laps de temps qui s'écoule jusqu'à l'émission des signaux de synchronisation, et le premier et le deuxième signal d'initiation diffèrent l'un de l'autre en ce qu'il est tenu compte de la durée qui s'écoule d'une réception du premier signal d'initiation jusqu'à l'émission du deuxième signal d'initiation.

12. Système de transmission de données selon la revendication 11, dans lequel chaque dispositif de transmission de données est réalisé de sorte que le premier signal d'initiation émis (225) communique quand doivent être attendus les signaux de synchronisation qui sont émis par le moyen de transmission de données (110) du dispositif de transmission de données du récepteur de réveil à la suite du deuxième signal d'initiation (125).

13. Procédé pour activer une transmission de données (200), aux étapes suivantes consistant à:
recevoir un signal d'initiation (125) par un récepteur de réveil (120) pendant l'état de repos (210) d'un moyen de transmission de données (110);
extraire une informations de transmission de données (230) du signal d'initiation (125); et
activer un moyen de transmission de données (110) en réponse au signal d'initiation (125), pour passer de l'état de repos (210) à un état de fonctionnement (220), pour effectuer, à l'état de fonctionnement (220), une transmission de données (200) avec un partenaire de communication,
dans lequel l'information de transmission de données (230) présente un moment pour l'activation du moyen de transmission de données (110) ou le moyen de transmission de données (110) est activé de sorte que la transmission de données (200) puisse s'effectuer en fonction de l'information de transmission de données (230),
dans lequel le signal d'initiation (225) est un premier signal d'initiation (225), et dans lequel est émis, en réponse à la réception du premier signal d'initiation (225), un deuxième signal d'initiation (225b),
**caractérisé par le fait que**
le premier et le deuxième signal d'initiation présentent des informations qui communiquent quand doivent être attendus des signaux de synchronisation devant être reçus du moyen de transmission de données (110), et
les informations qui présentent le premier et le deuxième signal d'initiation et communiquent quand doivent être attendus des signaux de synchronisation sont indiquées sous forme d'un laps de temps qui s'écoule jusqu'à l'émission des signaux de synchronisation et le premier et le deuxième signal d'initiation diffèrent l'un de l'autre en ce qu'il est tenu compte de la durée qui s'écoule d'une réception du premier signal d'initiation à l'émission du deuxième signal d'initiation.

14. Procédé selon la revendication 13, dans lequel le moment de l'activation se situe après une durée (T) après la réception du signal d'initiation (125), et l'activation n'a lieu qu'au moment de l'activation.

15. Programme d'ordinateur avec un code de programme pour réaliser le procédé selon la revendication 13 ou la revendication 14 lorsque le programme d'ordinateur est exécuté sur un ordinateur.
